# EUROPÄISCHE PATENTSCHRIFT

(11) **EP 1 598 157 B1**
(45) Veröffentlichungstag und Bekanntmachung des Hinweises auf die Patenterteilung: **12.03.2008**
(21) Anmeldenummer: 04028896.1
(22) Anmeldetag: 07.12.2004
(51) Int. Cl.: B25J 21/00

(54) **Roboterarbeitszelle mit einem eine Ausbuchtung in einer Seitenwand aufweisenden containerartigen Gehäuse**
Robot workcell with a container-like housing provided with a bulge in a sidewall
Poste de travail d'un robot avec une enceinte en forme de conteneur comprenant une bosse dans une paroi latérale

(30) Priorität: 21.05.2004 DE 202004008193 U
(43) Veröffentlichungstag der Anmeldung: 23.11.2005
(73) Patentinhaber: ABB PATENT GmbH, 68526 Ladenburg (DE)
(72) Erfinder: Opitz, Wolfgang, 35647 Waldsolms (DE)
(74) Vertreter: Miller, Toivo

(56) Entgegenhaltungen:
- DE-A1- 3 532 305
- DE-U1- 29 715 000
- US-A- 5 536 137

## Beschreibung

Die Erfindung betrifft eine Roboterarbeitszelle mit einem containerartigen Gehäuse, in dem wenigstens ein Industrieroboter und wenigstens ein drehbarer Positionierer angeordnet sind.

Roboterarbeitszellen sind häufig in containerartigen Gehäusen untergebracht, in deren Innerem sich unter anderem ein oder mehrere Industrieroboter, beispielsweise Schweißroboter, befinden. Durch das Gehäuse ist der Roboterarbeitsplatz weitgehend von der Umwelt abgeschirmt, so dass eine Beeinflussung der Umwelt, beispielsweise eine Blendung des Bedienpersonals durch Schweißlichtbögen, vermieden ist.

In einem für das Bedienpersonal zugänglichen Bereich innerhalb des Gehäuses ist ferner ein Positionierer angeordnet, welcher zwei Haltevorrichtungen für die Aufnahme von zu bearbeitenden Werkstücken aufweist. Die beiden Haltevorrichtungen sind an gegenüberliegenden Seiten einer vertikalen Achse angeordnet, um welche der Positionierer drehbar ist. Dabei ist eine Haltevorrichtung einer Bedienperson zugewandt, welche diese Haltevorrichtung mit zu bearbeitenden Werkstücken bestückt, während die zweite Haltevorrichtung dem Industrieroboter zugewandt ist, welcher Werkstücke, mit denen die zweite Haltevorrichtung bestückt ist, bearbeitet. Durch eine Drehung des Positionierers um 180° gelangt die von der Bedienperson bestückte Haltevorrichtung zu dem Industrieroboter, während die Haltevorrichtung mit den bearbeiteten Werkstücken zu der Bedienperson gelangt.

Damit der Positionierer eine Drehbewegung um die vertikale Achse ausführen kann, muss die Roboterarbeitszelle mindestens so breit sein wie der Durchmesser des Drehkreises des Positionierers. Ein Transport einer kompletten Roboterarbeitszelle ist somit problematisch, wenn der Durchmesser des Drehkreises die Breite des Transportmediums, beispielsweise eines Lastkraftwagens (Lkw), überschreitet.

Aus der DE3532305A1 ist eine Fertigungs- und/oder Montagezelle für Werkstücke bekannt geworden, die innerhalb der Zelle eine Grunddreheinheit aufweist, innerhalb der ein Roboter angeordnet ist, welche Grunddreheinheit um eine vertikale Achse schwenkbar ist. Damit die Grunddreheinheit behinderungsfrei gedreht werden kann, sind die Längsseitenwände der Zelle aufklappbar, wobei sie in eingeklapptem Zustand die Außenwandung bilden. Die klappbaren Wände bestehen aus zwei Seitenteilen, einem Abdeckteil, einem Frontteil sowie einem nicht näher dargestellten, einschiebbaren Bodenteil.

Aufgabe der Erfindung ist es, eine Roboterarbeitszelle anzugeben, welche bei verringerter Transportbreite einfach aufzubauen ist.

Diese Aufgabe wird erfindungsgemäß gelöst durch die Merkmale des Anspruches 1.

Erfindungsgemäß weißt mindestens ein Wandabschnitt wenigstens einer Seitenwand des containerartigen Gehäuses eine zylindersegmentförmige Ausbuchtung auf, deren Mittelachse vertikal läuft und in einer Betriebsstellung der Roboterarbeitszelle ist dieser Wandabschnitt so angeordnet, dass die Ausbuchtung nach außen vorspringt. Die Ausbuchtung ist dabei so bemessen, dass eine Drehung des Positionierers um seine vertikal verlaufende Drehachse unter Vermeidung einer Berührung des Positionierers mit der Seitenwand möglich ist. Der die Ausbuchtung aufweisende Wandabschnitt ist ferner in eine Transportstellung verbringbar, in welcher sich die Ausbuchtung im Inneren des Gehäuses befindet. Dabei ist die Ausbuchtung wenigstens in einem der Bodenwand des Gehäuses benachbarten Bereich abeschrägt.

In einer vorteilhaften Ausgestaltung der Erfindung ist der die Ausbuchtung aufweisende Wandabschnitt um eine vertikale Achse drehbar, wobei diese Achse vorteilhaft in der Ebene der Seitenwand des Gehäuses im Bereich der Ausbuchtung verläuft. Der Wandabschnitt kann dadurch verhältnismäßig schnell und einfach aus der Betriebsstellung in die Transportstellung gedreht werden.

Vorteilhaft ist die Ausbuchtung des Wandabschnitts an dem der Deckwand des Gehäuses benachbarten Ende mit einer horizontal verlaufenden Platte abgedeckt. Durch eine solche Platte ist die Festigkeit oder die Steifigkeit der Ausbuchtung und des Wandabschnitts erhöht.

Anstelle des Abdeckens der Ausbuchtung mittels einer horizontal verlaufenden Platte ist es auch denkbar, die Ausbuchtung in einem der der Deckwand des Gehäuses benachbarten Bereich abgeschrägt zu gestalten. Dies verhindert, zusätzlich zur Erhöhung der Festigkeit oder der Steifigkeit der Ausbuchtung und des Wandabschnitts, dass sich eine Bedienperson in der Ausbuchtung, welche ein Gefahrenbereich ist, aufhält.

Weitere vorteilhafte Ausgestaltungen der Erfindung sind den weiteren Unteransprüchen zu entnehmen.

Anhand der Zeichnungen, in denen Ausführungsbeispiele der Erfindung dargestellt sind, werden die Erfindung, vorteilhafte Ausgestaltungen und Verbesserungen der Erfindung, sowie weitere Vorteile näher erläutert und beschrieben.

Es zeigen:
- Fig. 1: eine erfindungsgemäße Roboterarbeitszelle in Betriebsstellung,
- Fig. 2: eine erfindungsgemäße Roboterarbeitszelle in Transportstellung,
- Fig. 3: eine Frontansicht auf eine Roboterarbeitszelle in Betriebsstellung und
- Fig. 4: eine perspektivische Darstellung einer Roboterarbeitszelle in Transportstellung.

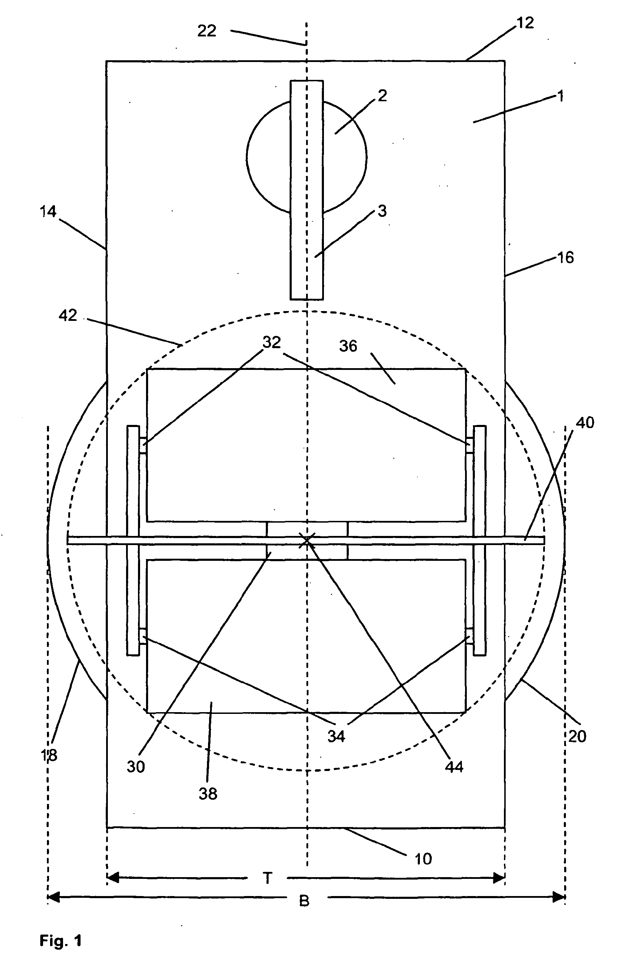

In Fig. 1 ist eine Roboterarbeitszelle in Betriebsstellung gezeigt. Die Roboterarbeitszelle ist dabei in einem containerartigen Gehäuse 1 untergebracht, welches eine langgestreckte rechteckige Grundfläche besitzt. Das Gehäuse 1 besitzt eine Vorderwand 10, eine rechtwinklig zu der Vorderwand 10 verlaufende erste Seitenwand 14, eine rechtwinklig zu der Vorderwand 10 und parallel zu der ersten Seitenwand 14 verlaufende zweite Seitenwand 16 und eine rechtwinklig zu den Seitenwänden 14, 16 und parallel zu der Vorderwand 10 angeordnete Rückwand 12. Parallel zu den Seitenwänden 14, 16 und im gleichen Abstand zu diesen verläuft eine vertikale Mittelebene 22 durch das Gehäuse 1.

In dem Gehäuse 1 ist der Rückwand 12 benachbart ein Industrieroboter 2, hier ein Schweißroboter, angeordnet, welcher einen beweglichen Arm 3 besitzt. An dem Ende dieses Arms 3 ist eine hier nicht gezeigte Schweißelektrode angebracht, mittels welcher der Schweißroboter Schweißvorgänge ausführen kann. Bei dem Industrieroboter 2 kann es sich auch um einem Schraub- oder Bohrroboter handeln, welcher dann anstelle der Schweißelektrode ein entsprechendes Werkzeug am Ende seines Arms 3 besitzt. Weiterhin ist es denkbar, mehrere, vorzugsweise zwei, Industrieroboter in dem Gehäuse 1 anzuordnen.

In der Roboterarbeitszelle ist weiterhin einen Positionierer 30 untergebracht, welcher in dem Gehäuse 1 der Vorderwand 10 benachbart angeordnet ist. Der Positionierer 30 weist eine erste Haltevorrichtung 32, welche mit einem ersten Werkstück 36 bestückt ist, sowie eine zweite Haltevorrichtung 34, welche mit einem zweiten Werkstück 38 bestückt ist, auf. Der Positionierer 30 ist um eine vertikale Drehachse 44 drehbar, wobei die Haltevorrichtungen 32, 34 an gegenüberliegenden Seiten der Drehachse 44 angeordnet sind. Die Drehachse 44 des Positionierer 30 verläuft in der Mittelebene 22 des Gehäuses 1.

In der gezeigten Darstellung ist das erste Werkstück 36 dem Industrieroboter 2 zugewandt, während das zweite Werkstück 38 der Vorderwand 10 zugewandt ist. In der Vorderwand 10 ist eine Öffnung vorgesehen, die beispielsweise durch ein Rolltor verschließbar ist, und durch welche eine Bedienperson in das Gehäuse 1 gelangen kann, um die ihm zugewandte Haltevorrichtung, in diesem Fall die zweite Haltevorrichtung 34, mit einem Werkstück zu bestücken oder das Werkstück von ihr zu lösen. Nach einer Drehung des Positionierers 30 um seine Drehachse 44 um 180° sind die zweite Haltevorrichtung 34 und das zweite Werkstück 38, mit welchem die zweite Haltevorrichtung 34 bestückt ist, dem Industrieroboter 2 und die erste Haltevorrichtung 32 und das erste Werkstück 36 der Vorderwand 10 sowie der Bedienperson zugewandt.

Der Positionierer 30 besitzt weiterhin einen Blendschutz 40, welcher als senkrecht stehende, flache Platte ausgeführt ist. Der Blendschutz 40 verläuft in Betriebsstellung rechtwinklig zu der Mittelebene 22 des Gehäuses 1, wobei sich die erste Haltevorrichtung 32 mit dem ersten Werkstück 36 auf einer Seite des Blendschutzes 40 und die zweite Haltevorrichtung 34 mit dem zweiten Werkstück 38 auf der anderen Seite des Blendschutzes 40 befinden. Die Drehachse 44 des Positionierers 30 verläuft mittig durch den Blendschutz 40. In Betriebsstellung des Positionierers 30 trennt der Blendschutz 40 den Arbeitsbereich des Industrieroboters 2 von dem der Bedienperson zugänglichen, der Vorderwand 10 benachbarten Bereich des Gehäuses 1 und verhindert so beispielsweise eine Blendung der Bedienperson durch Schweißlichtbögen.

Um eine Drehung um seine vertikale Achse 44 ausführen zu können, benötigt der hier dargestellte Positionierer 30 einen Drehkreis 42, dessen Durchmesser größer ist als die Breite des Gehäuses 1, welche der Breite T in Transportstellung entspricht.

Die erste und zweite Seitenwand 14, 16 besitzen daher in dem dem Positionierer benachbarten Wandabschnitt je eine Ausbuchtung 18, 20. Die erste Ausbuchtung 18 und die zweite Ausbuchtung 20 sind jeweils nach außen konvex und überragen die Seitenwände 14, 16, wobei sie zylindersegmentförmig ausgebildet sind. Die Mittelachsen der zylindersegmentförmigen Ausbuchtungen 18, 20 fallen mit der Drehachse 44 des Positionierers 30 zusammen. Der Durchmesser des Zylinders, auf dem die Ausbuchtungen 18, 20 liegen, ist dabei größer als der Durchmesser des Drehkreises 42 des Positionierers, so dass sich dieser unbehindert drehen kann.

Damit entspricht die Breite B der Roboterarbeitszelle in Betriebsstellung dem Durchmesser des Zylinders, welcher durch die zylindersegmentförmigen Ausbuchtungen 18, 20 bestimmt ist.

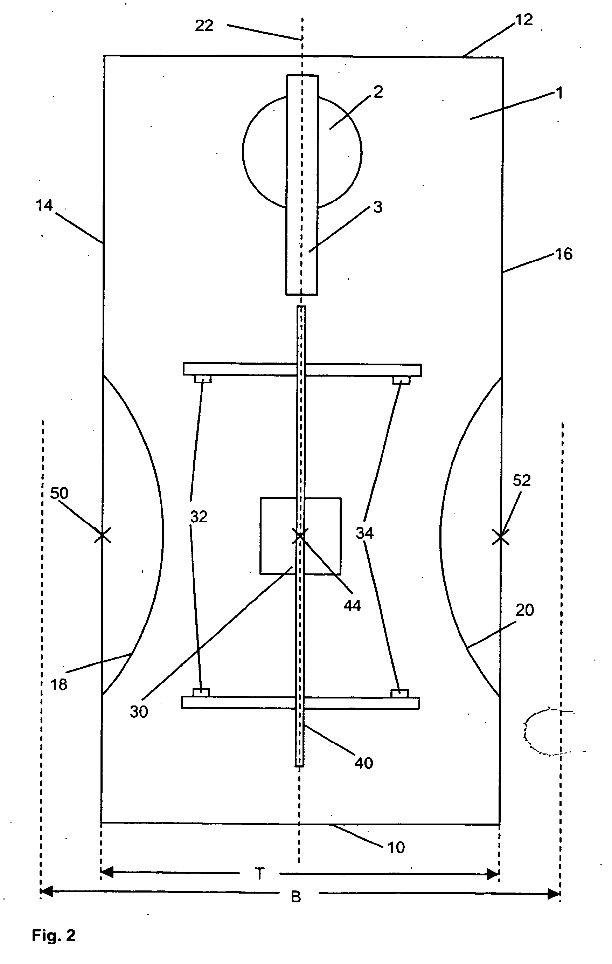

In Fig. 2 ist die gleiche Roboterarbeitszelle in Transportstellung dargestellt. Dabei sind die Werkstücke 36, 38 von den Haltevorrichtungen 32, 34 des Positionierers 30 entfernt. Der Positionierer 30 ist gegenüber der Betriebsstellung um 90° um seine vertikale Drehachse 44 gedreht und der Blendschutz 40 verläuft somit parallel zu den Seitenwänden 14, 16 des Gehäuses 1.

Der Wandabschnitt der ersten Seitenwand 14, welcher die erste Ausbuchtung 18 aufweist, ist um eine vertikal verlaufende erste Drehachse 50 drehbar. In Transportstellung ist dieser Wandabschnitt gegenüber der Betriebsstellung um 180° um die erste Drehachse 50 gedreht, wodurch sich die Ausbuchtung 18 im Inneren des Gehäuses 1 befindet. Entsprechend ist der Wandabschnitt der zweiten Seitenwand 16 mit der zweiten Ausbuchtung 20 um 180° um eine zweite vertikal verlaufende Drehachse 52 gedreht. Die zweite Ausbuchtung 20 befindet sich in Transportstellung ebenfalls im Inneren des Gehäuses 1.

Die erste Drehachse 50 verläuft vertikal in der Ebene der ersten Seitenwand 14 im Bereich der ersten Ausbuchtung 18. Entsprechend verläuft die zweite Drehachse 52 vertikal in der Ebene der zweiten Seitenwand 16 im Bereich der zweiten Ausbuchtung 20.

Die Breite T der Roboterarbeitszelle in Transportstellung ist in diesem Fall der Abstand der Außenflächen der Seitenwände 14, 16 voneinander und diese ist somit gegenüber der Breite B in Betriebsstellung um die Dicken der Ausbuchtungen 18, 20 verringert.

Die Dicke einer Ausbuchtung 18, 20 ist dabei der maximale Abstand der Außenfläche der jeweiligen Ausbuchtung 18, 20 von der Ebene der benachbarten Seitenwand 14, 16.

Die Verringerung der Breite T in Transportstellung gegenüber der Breite B in Betriebsstellung wird anhand eines Zahlenbeispiels näher erläutert. Im gewählten Beispiel beträgt die Breite T in Transportstellung 250 cm, so dass ein Transport der Roboterarbeitszelle mittels eines Lastkraftwagens möglich ist. Der Drehkreis 42 des Positionierers 30 hat einen Durchmesser von 330 cm, und die Breite B in Betriebsstellung, welche geringfügig größer als der Durchmesser des Drehkreises 42 ist, beträgt etwa 350 cm. Die Ausbuchtungen 18, 20 weisen somit jeweils eine Dicke von 50 cm auf und die Breite T in Transportstellung ist gegenüber der Breite B in Betriebsstellung um etwa 100 cm verringert.

Im gewählten Beispiel ist der Positionierer 30 mittig zwischen den Seitenwänden 14, 16 angeordnet, so dass seine Drehachse 44 in der Mittelebene 22 des Gehäuses 1 verläuft. Der Drehkreis 42 des Positionierers 30 ragt in diesem Fall gleich weit über die Seitenwände 14, 16 heraus und die Ausbuchtungen 1.8, 20 weisen die gleiche Dicke auf. Ist der Positionierer 30 aber beispielsweise näher an der zweiten Seitenwand 16 angeordnet, so kann die erste Ausbuchtung 18 in der ersten Seitenwand 14 kleiner ausgeführt sein als die zweite Ausbuchtung 20 in der zweiten Seitenwand 16. Der Positionierer 30 kann auch so nahe an der zweiten Seitenwand 16 angeordnet sein, dass sein Drehkreis 42 nicht über die erste Seitenwand 14 herausragt. In diesem Fall wird lediglich in der zweiten Seitenwand 16 eine Ausbuchtung 20 benötigt.

Im gewählten Beispiel sind die Wandabschnitte mit den Ausbuchtungen 18, 20 um je eine vertikal verlaufende Achse 50, 52 drehbar. Es ist auch denkbar, die entsprechenden Wandabschnitte um je eine horizontal verlaufende Achse drehbar zu machen. Diese Achsen verlaufen dabei beispielsweise in je einer Ebene der Seitenwände 14, 16 des Gehäuses 1.

Weiterhin ist es denkbar, die Wandabschnitte mit den Ausbuchtungen 18, 20 fest, das heißt nicht drehbar, an den entsprechenden Seitenwänden 14, 16 anzubringen, beispielsweise zu verschrauben. In diesem Fall sind die Wandabschnitte mit der ersten und zweiten Ausbuchtung 18, 20 aus der Betriebsstellung in die Transportstellung verbringbar, indem die Wandabschnitte abgeschraubt, außerhalb des Gehäuses 1 gedreht und anschließend so an den Seitenwänden 14, 16 befestigt werden, dass die Ausbuchtungen 18, 20 in das Innere des Gehäuses 1 hineinragen.

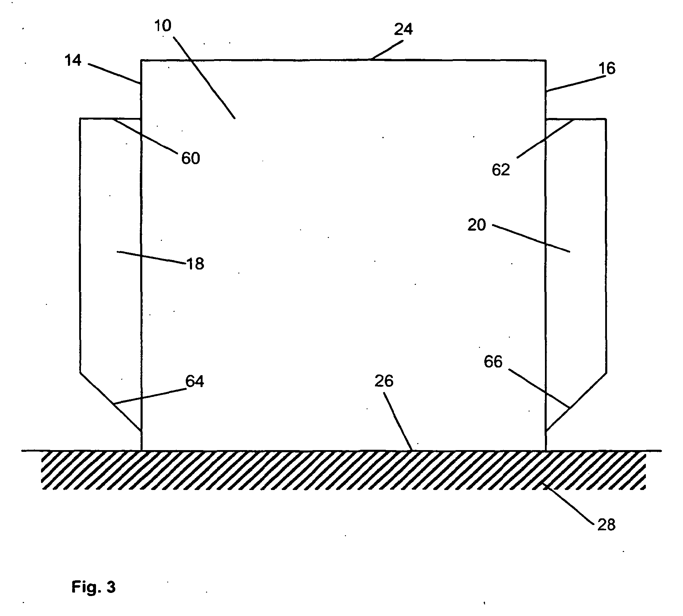

In Fig. 3 ist eine Frontansicht auf eine Roboterarbeitszelle in Betriebsstellung gezeigt. In dieser Darstellung ist die Vorderwand 10 des Gehäuses 1 sichtbar, welches seitlich von den Seitenwänden 14, 16 begrenzt wird. In dem dem Erdboden 28 abgewandten oberen Bereich ist das Gehäuse 1 mittels einer Deckwand 24 abgeschlossen, während im dem Erdboden 28 zugewandten unteren Bereich eine Bodenwand 26 vorgesehen ist.

An der ersten Seitenwand 14 springt die erste Ausbuchtung 18 nach außen vor. Die Ausbuchtung 18 ist an ihrem der Deckwand 24 zugewandten Ende mit einer horizontal verlaufenden ersten Platte 60 abgedeckt. In ihrem der Bodenwand 26 benachbarten Bereich besitzt die Ausbuchtung 18 eine erste Schräge 64. Die erste Schräge 64 ist dabei so ausgestaltet, dass die Mantellinie, welche mittig auf der ersten zylindersegmentförmigen Ausbuchtung 18 liegt, kürzer ist als andere Mantellinien auf der ersten zylindersegmentförmigen Ausbuchtung 18. Somit verläuft die erste Schräge 64 beginnend an der ersten Seitenwand 14 in einem Winkel von der ersten Seitenwand14 und von der Bodenwand 26 weg entlang der horizontalen Ausdehnung der ersten Ausbuchtung 18.

Entsprechend weist die zweite Ausbuchtung 20, welche an der zweiten Seitenwand 16 nach außen vorspringt, an ihrem der Deckwand 24 zugewandten Ende eine horizontal verlaufende zweite Platte 62 und in ihrem der Bodenwand 26 benachbarten Bereich eine zweite Schräge 66 auf.

Die Platten 60, 62 und die Schrägen 64, 66 erhöhen die Festigkeit oder die Steifigkeit der entsprechenden Ausbuchtungen 18, 20. Die Schrägen 64, 66 verhindern zusätzlich, dass eine Bedienperson sich innerhalb einer der Ausbuchtungen 18, 20 aufhalten kann. Weiterhin gewährleisten die Schrägen 64, 66, dass Fremdkörper, beispielsweise von einen zu bearbeitenden Werkstück 36, 38 abfallende Teile, nicht in einer der Ausbuchtungen 18, 20 verbleiben, wo sie eine Blockierung des Positionierers 30 verursachen können, sondern auf die Bodenwand 26 des Gehäuses 1 fallen.

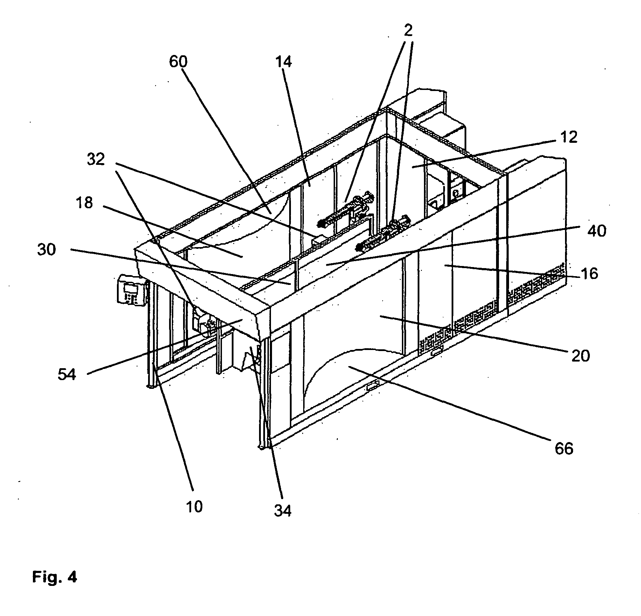

Fig. 4 zeigt eine perspektivische Darstellung einer Roboterarbeitszelle in Transportstellung.

Der Positionierer 30 ist gegenüber der Betriebsstellung um 90° gedreht und der Blendschutz 40 verläuft parallel zu den Seitenwänden 14, 16. Werkstücke sind von den Haltevorrichtungen 32, 34 entfernt.

In dem der Rückwand 12 benachbarten Bereich des Gehäuses der Roboterarbeitszelle sind zwei Industrieroboter 2 zum Bearbeiten von an den Haltevorrichtungen 32, 34 befestigbaren Werkstücken vorgesehen.

Die Vorderwand 10 besitzt eine Öffnung, welche sich annähernd über die gesamte Fläche der Vorderwand 10 erstreckt und durch ein Rolltor 54 verschließbar ist. In der gezeigten Darstellung sind das Rolltor 54 eingerollt und die Öffnung in der Vorderwand 10 offen.

Die die Ausbuchtungen 18, 20 aufweisenden Wandabschnitte der Seitenwände 14, 16 sind in Transportstellung verbracht. Die Ausbuchtungen 18, 20 ragen dabei in das Innere des Gehäuses der Roboterarbeitszelle.

An den der hier nicht dargestellten Deckwand benachbarten Enden der Ausbuchtungen 18, 20 sind je eine horizontal verlaufende Platte 60, 62 zur Erhöhung der Steifigkeit vorgesehen. In dem der hier ebenfalls nicht dargestellten Bodenwand benachbarten Bereich verfügen die Ausbuchtungen 18, 20 über je eine Schräge 64, 66, welche die Festigkeit der Ausbuchtungen erhöhen und welche ein Verbleiben von Personen oder Fremdkörpern in den Ausbuchtungen 18, 20 verhindern. In der gezeigten Darstellung sind die erste Schräge 64 der ersten Ausbuchtung 18 und die zweite Platte 62 der zweiten Ausbuchtung 20 nicht sichtbar.

Durch Schließen des Rolltores 54 lässt sich verhindern, dass eine Bedienperson das Gehäuse der Roboterarbeitszelle betritt, während der Positionierer 30 sich um seine vertikale Achse dreht. Alternativ zu dem Rolltor 54 sind auch eine Lichtschranke oder ein Laserscanner in der Vorderwand 10 vorsehbar.

### Bezugszeichenliste

- 1:: Gehäuse
- 2:: Industrieroboter
- 3:: Arm des Industrieroboters

- 10:: Vorderwand
- 12:: Rückwand
- 14:: erste Seitenwand
- 16:: zweite Seitenwand
- 18:: erste Ausbuchtung
- 20:: zweite Ausbuchtung
- 22:: Mittelebene
- 24:: Deckwand
- 26:: Bodenwand
- 28:: Erdboden

- 30:: Positionierer
- 32:: erste Haltevorrichtung
- 34:: zweite Haltevorrichtung
- 36:: erstes Werkstück
- 38:: zweites Werkstück
- 40:: Blendschutz
- 42:: Drehkreis des Positionierers
- 44:: Drehachse des Positionierers

- 50:: erste Drehachse
- 52:: zweite Drehachse
- 54:: Rolltor

- 60:: erste Platte
- 62:: zweite Platte
- 64:: erste Schräge
- 66:: zweite Schräge

- B:: Breite in Betriebsstellung
- T:: Breite in Transportstellung

## Patentansprüche

1. Roboterarbeitszelle, mit einem containerartigen Gehäuse (1), in dem wenigstens ein Industrieroboter (2) und wenigstens ein drehbarer Positionierer (30) angeordnet sind, wobei mindestens ein Wandabschnitt mindestens einer Seitenwand (14, 16) des Gehäuses (1) eine zylindersegmentförmige Ausbuchtung (18, 20) aufweist, deren Mittelachse vertikal verläuft, welche in einer Betriebsstellung nach außen vorspringt und eine Drehung des Positionierers (30) um eine vertikal verlaufende Drehachse (44) unter Vermeidung einer Berührung des Positionierers (30) mit der Seitenwand (14, 16) ermöglicht, wobei der die Ausbuchtung (18, 20) aufweisende Wandabschnitt in eine Transportstellung verbringbar ist, in welcher sich die Ausbuchtung (18, 20) im Inneren des Gehäuses (1) befindet, und wobei die Ausbuchtung (18, 20) in einem der Bodenwand (26) des Gehäuses (1) benachbarten Bereich abgeschrägt ist.

2. Roboterarbeitszelle nach Anspruch 1, **dadurch gekennzeichnet, dass** der die Ausbuchtung (18, 20) aufweisende Wandabschnitt um eine vertikale Drehachse (50, 52) drehbar ist.

3. Roboterarbeitszelle nach Anspruch 2, **dadurch gekennzeichnet, dass** die vertikale Achse (50, 52) in der Ebene der Seitenwand (14, 16) im Bereich der Ausbuchtung (18, 20) verläuft.

4. Roboterarbeitszelle nach einem der vorherigen Ansprüche, **dadurch gekennzeichnet, dass** die zylindersegmentförmige Ausbuchtung (18, 20) in Betriebsstellung auf einem Zylinder liegt, dessen Mittelachse mit der Drehachse (44) des Positionierers (30) zusammenfällt.

5. Roboterarbeitszelle nach einem der vorstehenden Ansprüche, **dadurch gekennzeichnet, dass** die Ausbuchtung (18, 20) an dem der Deckwand (24) des Gehäuses (1) benachbarten Ende mit einer horizontal verlaufenden Platte (60, 62) abgedeckt ist.

6. Roboterarbeitszelle nach einem der Ansprüche 1 bis 4, **dadurch gekennzeichnet, dass** die Ausbuchtung (18, 20) in einem der Deckwand (24) des Gehäuses (1) benachbarten Bereich abgeschrägt ist.

7. Roboterarbeitszelle nach einem der vorstehenden Ansprüche, **dadurch gekennzeichnet, dass** zwei gegenüberliegende Seitenwände (14, 16) je einen Wandabschnitt mit einer Ausbuchtung (18, 20) aufweisen.

## Claims

1. A robot work cell, comprising a container-like housing (1) in which at least one industrial robot (2) and at least one rotary positioner (30) are arranged, with at least one section of at least one of the side walls (14, 16) of the housings (1) comprising an outward bulge (18, 20) in the shape of a cylinder segment whose central axis extends vertically and which protrudes outwardly in an operating position and enables a rotation of the positioner (30) about a vertically extending pivot axle (44) by avoiding any contact of the positioner (30) with the side wall (14, 16), with the wall section comprising the bulge (18, 30) being capable of being brought to a transport position in which the bulge (18, 20) is located in the interior of the housing (1), and with the bulge (18, 20) being beveled in a region adjacent to the floor wall (26) of the housing (1).

2. A robot work cell according to claim 1, **characterized in that** the wall section comprising the bulge (18, 20) can be rotated about a vertical pivot axle (50, 52).

3. A robot work cell according to claim 2, **characterized in that** the vertical axle (50, 52) extends in the plane of the side wall (14,16) in the area of the bulge (18, 20).

4. A robot work cell according to one of the preceding claims, **characterized in that** the bulge (18, 20) in the shape of a cylinder segment rests in the operating position on a cylinder whose central axis coincides with the pivot axle (44) of the positioner (30).

5. A robot work cell according to one of the preceding claims, **characterized in that** the bulge (18, 20) is covered with a horizontally extending plate (60, 62) at the end adjacent to the cover wall (24) of the housing (1).

6. A robot work cell according to one of the claims 1 to 4, **characterized in that** the bulge (18, 20) is beveled in an area adjacent to the cover wall (24) of the housing (1).

7. A robot work cell according to one of the preceding claims, **characterized in that** the two opposite side walls (14, 16) each comprise a wall section with a bulge (18, 20).

## Revendications

1. Cellule de travail de robot avec un capotage (1) en forme de conteneur dans lequel sont disposés au moins un robot industriel (2) et au moins un dispositif de positionnement (30) capable de rotation, dans laquelle au moins une partie de paroi d'au moins une paroi latérale (14, 16) du capotage (1) présente un renfoncement (18, 20) en forme de segment de cylindre dont l'axe médian est vertical, qui dépasse vers l'extérieur dans une position de service et qui permet une rotation du dispositif de positionnement (30) autour d'un axe de rotation vertical (44) en évitant un contact du dispositif de positionnement (30) avec la paroi latérale (14, 16), dans laquelle la partie de paroi qui présente le renfoncement (18, 20) peut être amenée dans une position de transport où le renfoncement (18, 20) se trouve à l'intérieur du capotage (1), et dans laquelle le renfoncement (18, 20) est oblique dans une zone voisine de la paroi de fond (26) du capotage (1).

2. Cellule de travail de robot selon la revendication 1, **caractérisée en ce que** la partie de paroi présentant le renfoncement (18, 20) est capable de rotation autour d'un axe de rotation vertical (50, 52).

3. Cellule de travail de robot selon la revendication 2, **caractérisée en ce que** l'axe vertical (50, 52) passe dans le plan de la paroi latérale (14, 16) au niveau du renfoncement (18,20).

4. Cellule de travail de robot selon l'une des revendications précédentes, **caractérisée en ce que** le renfoncement (18, 20) en forme de segment de cylindre repose, dans la position de service, sur un cylindre dont l'axe médian coïncide avec l'axe de rotation (44) du dispositif de positionnement (30).

5. Cellule de travail de robot selon l'une des revendications précédentes, **caractérisée en ce que** le renfoncement (18, 20) est couvert à l'extrémité voisine de la paroi de couverture (24) du capotage (1) par une plaque horizontale (60, 62).

6. Cellule de travail de robot selon l'une des revendications 1 à 4, **caractérisée en ce que** le renfoncement (18,20) est oblique dans une zone voisine de la paroi de couverture (24) du capotage (1).

7. Cellule de travail de robot selon l'une des revendications précédentes, **caractérisée en ce que** deux parois latérales (14, 16) se faisant face possèdent chacune une partie de paroi avec un renfoncement (18, 20).
